# EUROPEAN PATENT APPLICATION

(11) **EP 4 799 461 A1**
(43) Date of publication of application: **02.09.2026**
(21) Application number: 26152209.8
(22) Date of filing: 16.01.2026
(51) Int. Cl.: A01D 34/00

(54) **CONTROL SYSTEM AND METHOD FOR FUEL EFFICIENCY OF MOWER**

(30) Priority: 27.02.2025 US 202519064893
(71) Applicant: Deere & Company, Moline, IL 61265 (US)
(72) Inventor: Somarowthu, Mahesh, Mannheim (DE); Raste, Hrishikesh, Mannheim (DE); Vadnere, Mohan A., Mannheim (DE); Gorivale, Sameer, Mannheim (DE); Lovett, Benjamin M., Mannheim (DE); Purohit, Geetika, Mannheim (DE)
(74) Representative: Stein, Stefan

(57) **Abstract**

A power management system and power management method for a work machine (10). The power management system and method include a real time data interface configured to receive real time work machine data. A processor (308) is configured to compute current machine operating conditions based on work machine data. The processor (308) is further configured to compute an optimized engine speed or an optimized maximum power based on the current machine operating requirements, and to adjust one of the engine speed or the maximum power based on a status of one of a ground speed automation selector, a power mode selector (326), or an economy mode selector (328).

## Description

### FIELD OF THE DISCLOSURE

The present disclosure relates to agricultural machines, and more specifically relates to power management systems for a mower or windrower.

### BACKGROUND

It can be difficult to estimate an optimal engine speed of an agricultural machine for performing upcoming work at a desired rate. Therefore, many operators will select an engine speed that is higher than necessary. While the higher engine speed provides more power to the machine, it decreases the fuel efficiency of the machine. Many operators may select an engine speed to maximize power capability without fully understanding the effect of fuel efficiency. Systems, devices, and/or methods for fuel efficiency improvement of agricultural machines including a swather, a windrower, or a mower that avoid drawbacks associated with such configurations remain an area of interest.

### SUMMARY

In one implementation, there is provided a power management system for an agricultural work machine having an engine. The power management system includes a real time data interface configured to receive real time work machine data and a processor. The processor is configured to compute current machine operating conditions based on the real time work machine data. The processor is further configured to compute an engine speed or a maximum power based on the current machine operating requirements, and to adjust one of the engine speeds based on actuation of an economy mode selector or to adjust the maximum power based on actuation of a power mode selector.

In some implementations the power management system includes a ground speed automation selector, wherein actuation of the ground speed automation selector enables the processor to compute the engine speed based on the actuation of the economy mode selector.

In some implementations the power management system includes wherein the computed engine speed is determined by the processor to be within a minimum value and a maximum value, wherein the computed engine speed is selected to optimize fuel consumption.

In some implementations the power management system includes a ground speed automation selector, wherein actuation of the ground speed automation selector enables the processor to compute the maximum power based on the actuation of the power mode selector.

In some implementations the power management system includes wherein the computed maximum power is determined by the processor by increasing ground speed to a value determined at one hundred percent maximum power, then reducing the ground speed from the one hundred percent maximum power and directing the work machine to travel at a minimum speed or at an operator selected maximum ground speed.

In some implementations the power management system includes a ground speed automation selector, wherein non-actuation of the ground speed automation selector and actuation of the economy mode selector enables the processor to operate the engine at an efficient mode at a constant ground speed selected by an operator.

In some implementations the power management system includes a ground speed automation selector, wherein non-actuation of the ground speed automation selector and actuation of the power mode selector enables the processor to operate the engine at a maximum power and at a variable ground speed selected by an operator, wherein the efficient mode includes a selection of a next power curve next to a maximum power curve.

In some implementations the power management system includes a headland mode selector configured to identify a headland, and actuation of the headland mode selector provides an alert to an operator to direct the processor to operate the engine at an idle speed selected by the operator.

In some implementations the power management system includes a transport mode selector configured to identify a transport mode, and actuation of the transport mode selector enable an operator to direct the processor to operate the engine at an engine speed selected by the operator or a propulsion based engine speed.

In an additional implementation there is provided power management method for an agricultural work machine. The power management method includes: receiving real time work machine data for the work machine; computing current machine operating conditions based on the real time work machine data; and computing with a processor, in response to actuation of a ground speed automation selector, one of an engine speed or a maximum power based on the computed current machine operating conditions, wherein the computed engine speed is computed in response to actuation of an economy mode selector and wherein the computed maximum power is computed in response to actuation of a power mode selector.

In some implementations the power management method includes wherein the computing with the processor includes computing the engine speed to be within a minimum value and a maximum value, wherein the engine speed is identified by the processor to optimize fuel consumption.

In some implementations the power management method includes wherein the computing with the processor includes computing the maximum power by increasing a ground speed to a value determined at a one hundred percent maximum power, then reducing the one hundred percent maximum power to a reduced power, and adjusting the ground speed to an adjusted ground speed based on the reduced power or adjusting the ground speed to an operator selected ground speed selected by the operator.

In some implementations the power management method includes identifying, by the processor, non-actuation of the ground speed automation selector and actuation of the economy mode selector and operating the engine at an efficient mode at a constant ground speed selected by the operator.

In some implementations the power management method includes identifying, by the processor, non-actuation of the ground speed automation selector and actuation of the power mode selector and operating the engine at a maximum power and at a variable ground speed selected by an operator.

In some implementations the power management method includes identifying, by the processor, non-actuation of the ground speed automation selector and actuation of a headland mode selector and provides an alert to an operator to direct the processor to operate the engine at an idle speed selected by the operator.

In some implementations the power management method includes identifying, by the processor, non-actuation of the ground speed automation selector and actuation of a transport mode selector enables an operator to direct the processor to operate the engine at an engine speed selected by an operator.

In some implementations the power management method includes identifying, by the processor, non-actuation of the ground speed automation selector and actuation of a headland mode selector and provides an alert to an operator to direct the processor to operate the engine at an idle speed selected by the operator.

In a further implementation there is provided an agricultural work machine. The agricultural work machine may comprising the power management system, in particular the power management system according to at least one of the claims 1 to 9. The agricultural work machine including an engine, a processor, operatively connected to the engine, configured to compute current machine operating conditions based on real time work machine data, and a real time data interface, operatively connected to the processor, configured to receive real time work machine data. The processor is further configured to compute in response to actuation of a ground speed automation selector, one of an engine speed or an maximum power based on the current machine operating requirements, wherein the computed engine speed is computed in response to actuation of an economy mode selector and wherein the computed maximum power is computed in response to actuation of a power mode selector.

In some implementations the agricultural work machine includes wherein the processor is configured to compute the engine speed to be within a minimum value and a maximum value, wherein the engine speed is identified by the processor to optimize fuel consumption.

In some implementations the agricultural work machine includes wherein the processor is configured to compute the maximum power by increasing a ground speed to a value determined at a one hundred percent maximum power, then reducing the one hundred percent maximum power to a reduced power, and adjusting the ground speed to an adjusted ground speed based on the reduced power or adjusting the ground speed to an operator selected ground speed selected by the operator

In some implementations the agricultural work machine includes wherein the processor is configured to predict upcoming machine power requirements based on the real time work machine data. The processor is further configured to compute the optimized engine speed based on the current machine power requirements and the upcoming machine power requirements.

### BRIEF DESCRIPTION OF THE DRAWINGS

The above-mentioned aspects of the present disclosure and the manner of obtaining them will become more apparent and the disclosure itself will be better understood by reference to the following description of the implementations of the disclosure, taken in conjunction with the accompanying drawings.
FIG. 1 is a side elevational view of a self-propelled crop harvesting machine.
FIG. 2 illustrates an exemplary graph of engine speed versus engine power showing brake specific fuel consumption levels as contours and contour lines
FIG. 3 illustrates an engine speed management system for a crop harvesting machine.
FIG. 4 illustrates a machine information display including an operator viewable display.
FIG. 5 illustrates a curved bar graph of a machine information display.
FIG. 6 illustrates a block diagram of operation of a headland and crop detection module of a controller.
FIGS. 7A and 7B illustrate an exemplary flow diagram for a power management system.
FIG. 8 illustrates a plurality of selectable fuel economy curves to optimize engine fuel consumption.

### DETAILED DESCRIPTION

The implementations of the present disclosure described below are not intended to be exhaustive or to limit the disclosure to the precise forms in the following detailed description. Rather, the implementations are chosen and described so that others skilled in the art may appreciate and understand the principles and practices of the present disclosure.

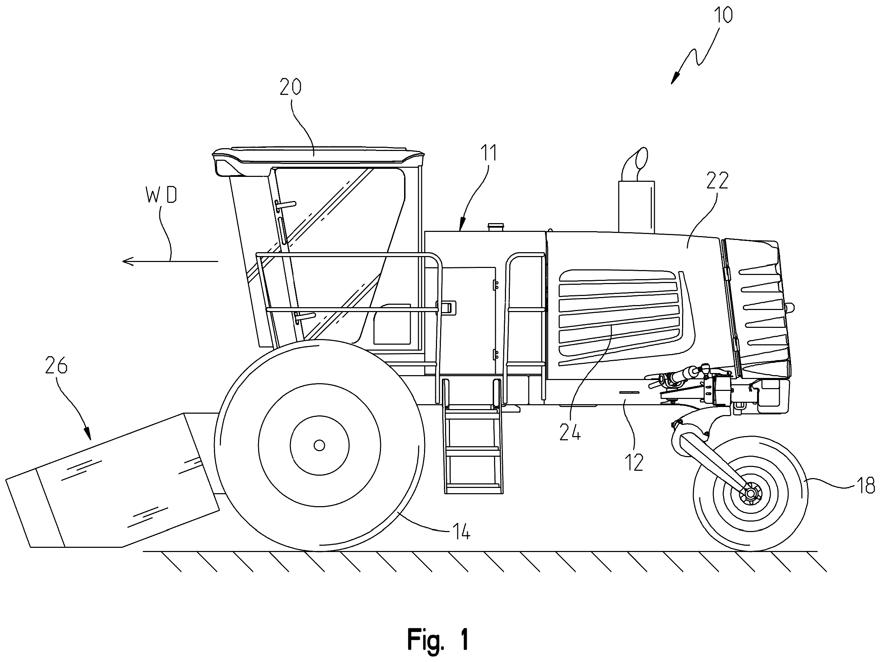

FIG. 1 is a side elevational view of a self-propelled crop harvesting machine 10 operable to cut and collect standing crop in a field, condition the cut crop as it moves through a mower conditioner machine to improve its drying characteristics, and then return the cut and conditioned crop material to the field in a windrow or swath. The crop harvesting machine 10 is also known as a mower conditioner, a windrower, or a swather. The crop harvesting machine 10 moves along the field in a working direction WD. The crop harvesting machine 10 includes tractor 11 including a main frame 12 supported on driven right and left front wheels, of which only the left front wheel 14 (with respect to the operator) is shown and on right and left caster mounted rear wheels, of which only a left rear wheel 18 is shown. Carried on a forward end region of the frame 12 is a cab 20. Mounted on the frame 12 behind the cab 20 is a housing 22 within which is located a prime mover 24 (not shown), such as an internal combustion engine, covered by the housing 22. A harvesting header 26 is coupled to and supported by the forward end of the frame 12. In some implementations, the harvesting header 26 is not used, and a mower, windrower, or swather, for instance is coupled to and pulled by the frame 12. Operator controls (not shown) are provided in the cab 20 for operation of the crop harvesting machine 10, including the attached harvesting header 26. The harvesting header 26, in one implementation, includes one or more ground engaging devices, such as one or more skid shoes or wheels (not shown), to support the harvesting header 26 during movement across a field. In one implementation, the harvesting header does not include a traction drive. In this configuration, all power for operation is received from the windrower traction unit or the tractor 11.

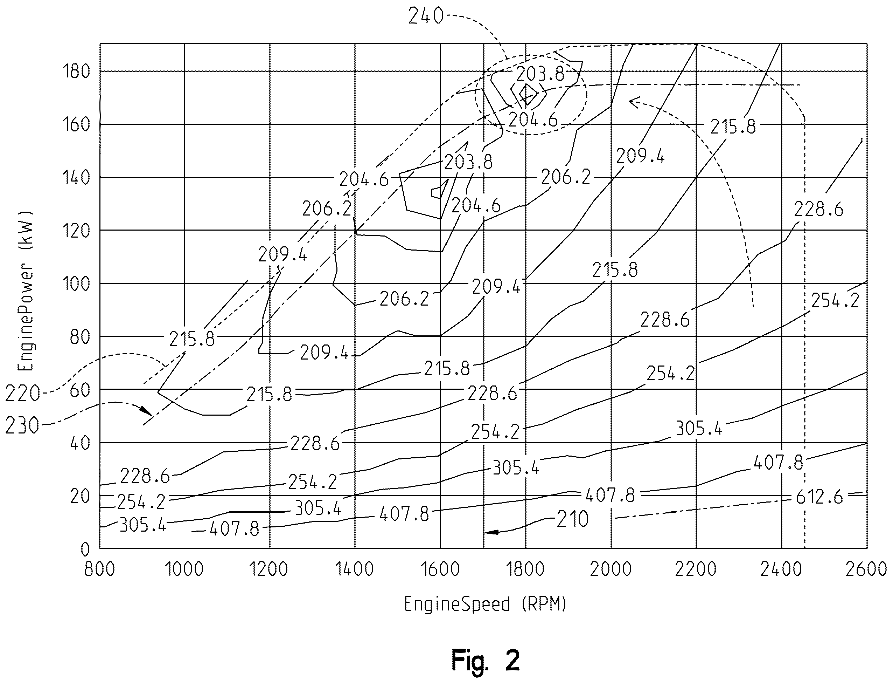

FIG. 2 illustrates an exemplary graph 200 of engine speed versus engine power showing brake specific fuel consumption (BSFC) levels as contours and contour lines. The X-axis is engine speed measured in revolutions per minute (RPM), and the Y-axis is engine power measured in kilowatts (kW). BSFC is a measure of the fuel efficiency of a machine that burns fuel and produces rotational, or shaft power. BSFC may be expressed in grams per kilowatt-hour or similar units. The lower the BSFC value, the greater the fuel efficiency.

FIG. 2 also shows a minimum engine operating speed line 210, a maximum power curve 220 and a rated/reserve power curve 230. In this exemplary graph, the minimum engine operating speed line 210 is at about 1700 RPM, and the maximum power curve 220 drops off dramatically as the engine speed goes above about 2450 RPM. The graph of FIG. 2 shows the BSFC levels decreasing as engine power approaches the maximum power curve 220 and the engine speed approaches the minimum engine operating speed 210, meaning that low power-utilization at higher engine speeds produce lower fuel efficiency.

In this example, for a power requirement along the rated/reserve power curve 230, the operator may initially operate the machine at a higher engine speed, such as 2350 RPM which has a BSFC level of about 216. This higher engine speed, however, requires a certain amount of fuel which places the engine in a condition where higher fuel consumption may be required. For instance, see the BSFC value of 215.8. The graph 200, however, illustrates that by reducing engine speed, the engine operates in a more fuel efficient region, such as region 240, where RPM is in the 1800-1900 range. For the rated/reserve power curve 230, the power curve is at or near its maximum and the BSFC level is at or near its minimum of about 204. The lower engine speed and BSFC value, 204 versus 216, for the same or similar rated/reserve power shows the fuel efficiency improvement with little or no loss of available machine power. Engines are the most fuel efficient (fuel spent per work done) in the lower engine speed and the higher engine power utilization zone. The closer the machine is run at this higher engine power utilization zone 240 the better the fuel efficiency of the machine.

In one implementation of a self-propelled windrower, maximum engine power is represented by a relatively flat curve when operating the self-propelled windrower between 1800 and 2100 RPM. At this level of power, the maximum power may require less fuel, which provides an engine overload protection feature that may substantially prevent an engine stall condition.

While the machine may not control the required power level, it may control the engine speed, since the required power level is driven by the load. In the example of FIG. 2, the operator is operating at a higher engine speed (2350 RPM) in conditions that require a lower power level (~90kW). So by enabling the machine to change the engine speed to a lower speed of 1800 RPM, the engine speed would still provide sufficient power overhead with an operator's selected current operating conditions. The change in engine speed would improve the static fuel efficiency only 15-20 g/(kW-h). However, in addition to the static improvement, as the load or required power level varies during the operation, moving vertical on the BSFC plot, the improvement in fuel efficiency is even greater.

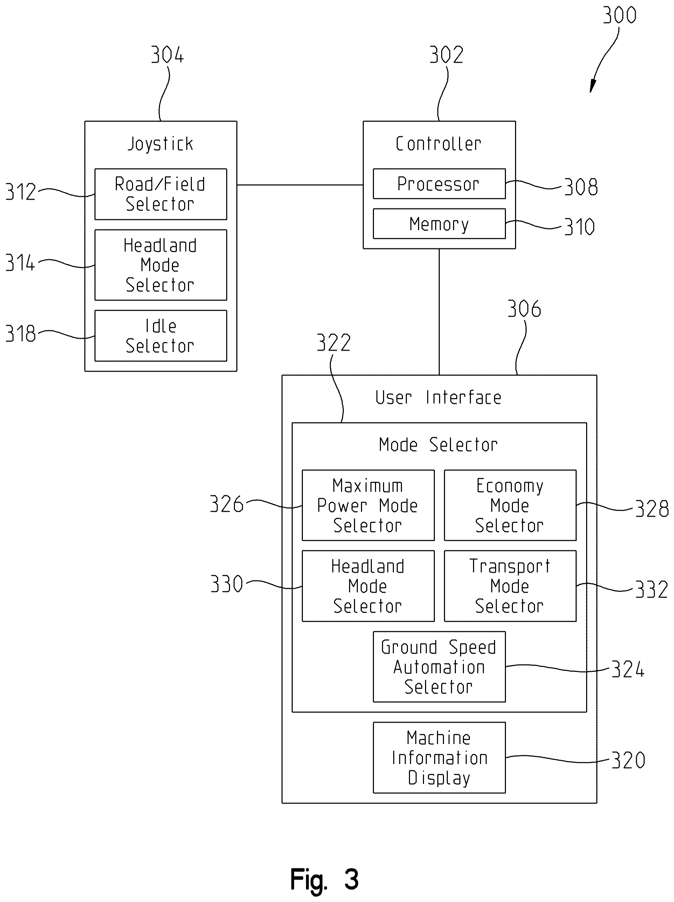

Power requirements may change for various reasons, and it is desirable that the power management system leave some overhead to deal with these potential changes. For instance, if the engine speed is configured to meet current machine power demands and the machine goes up a hill, or encounters a thick region of crop, or encounters some other load increasing condition, it is desirable that the engine speed be able to deal with these circumstances without stalling or having to experience some other undesirable situation. In this case, an engine speed management system 300 as illustrated in FIG. 3 may be configured to recognize an engine stall risk and take action to avoid the engine stall. For example, the engine speed management system 300 may temporarily reduce the ground speed of the machine to reduce the vehicle load, or take some other action adapted to allow the engine speed to recover and not stall.

In one implementation, the engine speed management system 300 may identify the current power requirements of the machine based on various parameters, for example based on current engine load, hydrostatic header drive pressure, merger cross belt motor drive pressure, swath flap load, This also applicable to the configuration where there are separate motors (e.g. hydraulic motors, electric, etc.) for the cutter bar/cutting element for the auger and conditioner hydraulic pressure. For example, a motor load for the cutter bar/cutting element (also referred to header) is a good representation of the quantity of crop being processed. Further to this example, the load on the conditioning or auger motor represents another variable, in addition to vehicle speed, harvesting settings, crop density sensor readings, etc. The harvesting settings may include, for example, header cutting speed, etc. The engine speed management system 300 may be coupled to various systems and sensors on the machine 10 and header 26 that provide the necessary information to the power management system to determine the current power requirements of the machine.

The machine 10 may include engine speed governing features that provide closed-loop speed control based on a set-point determined from several different configurable inputs. When operating under governor control, the desired power or torque command (and subsequently, fueling) is varied automatically to maintain the optimized engine speed. For instance, if the engine 24 suddenly comes under an increased load, as its speed drops, the governor responds by increasing fuel in order to maintain the optimized engine speed. If the engine 24 comes under an exceptionally high load, the governor power command may exceed the limits of the maximum power curve 220. If this happens, fueling will be limited by the maximum power curve 220 and as a result the engine speed will continue to decrease until an equilibrium is achieved or the load decreases. This is considered a one hundred percent (100%) load condition.

Many headers 26, such windrowers, swathers, and mowers, may be operated at higher engine speeds than necessary. While higher engine speeds provide more power to the machine, fuel efficiency of the machine is decreased such as shown in FIG 2.

It can be difficult to estimate the optimal engine speed for performing the upcoming work at the desired rate. Therefore, many operators will select the engine speed to maximize power capability without fully understanding the effect on fuel efficiency. However, it is typical of diesel engines to be least efficient when operating at an unnecessarily high speed which results in lower power utilization.

FIG. 3 illustrates an engine speed management system 300 for the machine 10 which may determine an engine speed that provides the required power while identifying options for optimizing fuel efficiency. This can reduce fuel consumption with better utilization of machine. Machine performance of machine 10 would provide more throughput and less fuel consumption while providing maximum uptime and a lower cost of operation. Lower engine RPM at higher harvesting component speeds provides a higher power density and greater fuel efficiency. A constant maximum power may be provided even at lower engine RPMs.

In one implementation, a torque curve is selected to optimize windrower and mowing applications. To optimize maximum efficiency and performance, machine component speeds may be re-worked where desired to improve header functions in the 1800 to 2250 engine RPM range. Better fuel efficiency may be achieved in an optimum range from 1600 to 2000 RPM, where the engine has its lowest specific fuel consumption (g/kWh).

FIG. 3 illustrates a block diagram of engine speed management system 300 of machine 10 including a controller 302, an operator control 304, such as a joystick which is located in the cab 20, and which is operatively connected to the controller 302. A user interface 306 is operatively connected to the controller 302 and may also located in the cab 20 in one implementation.

The controller 302, in different implementations, includes a computer, computer system, or other programmable devices. The controller 302 includes one or more processors 308 (e.g. microprocessors), and an associated memory 310, which can be internal to the processor or external to the processor. In addition, the memory 310 may include a memory storage physically located elsewhere from the processor(s) 308 and can include any cache memory in a processing device, as well as any storage capacity used as a virtual memory, e.g., as stored on a mass storage device or another computer coupled to controller 302. The mass storage device may include a cache or other dataspace, which can include databases. Memory storage, in other implementations, may be located in the "cloud", where the memory is located at a distant location, which provides the stored information wirelessly to the controller 302 through an antenna, typically supported by the cab 20 of the vehicle 10. The antenna may receive and/or transmit information from the distant location with a transmitter/receiver (not shown).

The controller 302 executes or otherwise relies upon computer software applications, components, programs, objects, modules, or data structures, etc. Software routines, resident in the included memory, are executed in response to the signals received from sensors. In other implementations, the computer software applications are located in the cloud. The executed software includes one or more specific applications, components, programs, objects, modules or sequences of instructions typically referred to as "program code". The program code includes one or more instructions located in the memory and other storage devices that execute the instructions that are resident in memory, which are responsive to other instructions generated by the system. The processor 308 is configured to execute the stored program instructions.

The engine speed management system 300 may also predict future or upcoming power requirements for the machine 10 based on topographical field contour maps, upcoming crop density, machine power requirement history during harvesting, etc. Forward-looking sensors (for example, cameras, LIDAR or other sensors), positioning sensors and other sensors and databases on-board or off-board the machine may be used to supply data to predict upcoming power requirements. In one implementation, a machine learning model may help with the predictions obtained by the engine speed management system 300. The engine speed management system 300 system and any associated machine learning model may collect current and historical power-consumption and related data that may be used to predict upcoming power requirements for the machine. This power-consumption data may include recent historical data from a previous row or pass of the field currently being harvested. This historical data may also be retrieved from geospatial data based on previous passes of the field, which were recorded by a prior map of the field.

This collected power-consumption and related data may be stored on-board and/or off-board the machine. This data may be collected over various conditions and various fields and may then be used to predict upcoming machine power requirements when the same or similar conditions are expected to occur. In addition, when a field is harvested where power-consumption and related data had previously been collected, that previous power-consumption and related data may be used to predict upcoming machine power requirements for the same field.

The engine speed management system 300 may then determine the desired power level based on the current and predicted power requirements, and then identify an optimized engine speed based on the BSFC levels. The power management system may then display and/or implement the optimized engine speed for operator reference and control in one implementation. The power management system may also control the optimized engine speed using the engine speed management system 300 in another implementation. In another implementation, the power management system provides for both operator reference and control as well as power management system control.

The operator controls 304 includes in one or more implementations, a road/field selector 312, a first headland mode selector 314, and an idle selector 318.

The user interface 306 in one implementation is located in the cab 20. The user interface 306 includes a plurality of operator selectable buttons configured to enable the operator to control the operation and function of the vehicle 10 and/or to control any accessories or implements being driven or pulled by the vehicle. The user interface 306, in one implementation, includes a user interface screen having a plurality of user selectable buttons to select from a plurality of commands or menus, each of which is selectable through a touch screen having a display. In another implementation, the user interface includes a plurality of mechanical push buttons as well as a touch screen. In another implementation, the user interface includes a display screen and only mechanical push buttons.

In the implementation of FIG. 3, the user interface 306 includes a machine information display 320 and a mode selector 322. The machine information display 320 may include a display screen to display machine information that may be continually updated to illustrate changing operating conditions of the machine 10, the engine 24, the header 26, or other implements. The mode selector 322 include one or more buttons selectable or actuatable by an operator to select different operating conditions based on the selection of one or more of the operators controls 304. For instance, selection of a ground speed automation (GSA) selector 324 enables the machine 10 to operate in one of two modes, a maximum power mode selected by a maximum power mode selector 326 or an economy mode selected by an economy mode selector 328. When the GSA selector 324 is selected, the controller 302 identifies which of the maximum power mode selector 326 or the economy mode selector 328 has been selected. In addition, the mode selector 322 includes a second headland mode selector 330 having a function similar to that of the first headland mode selector 314. A transport mode selector 332 may be selected by the operator. Selection of the transport mode selector 332 may be used by the operator to indicate that the machine 10 is being driven on a road for moving between fields, to storage, or for maintenance or repair. Once selected, the machine information display may display a number of different selectable road speeds for moving or may display an adjustable speed selector. In this case, the operator may select the road speed as desired over a range of road speeds based on road conditions, for instance.

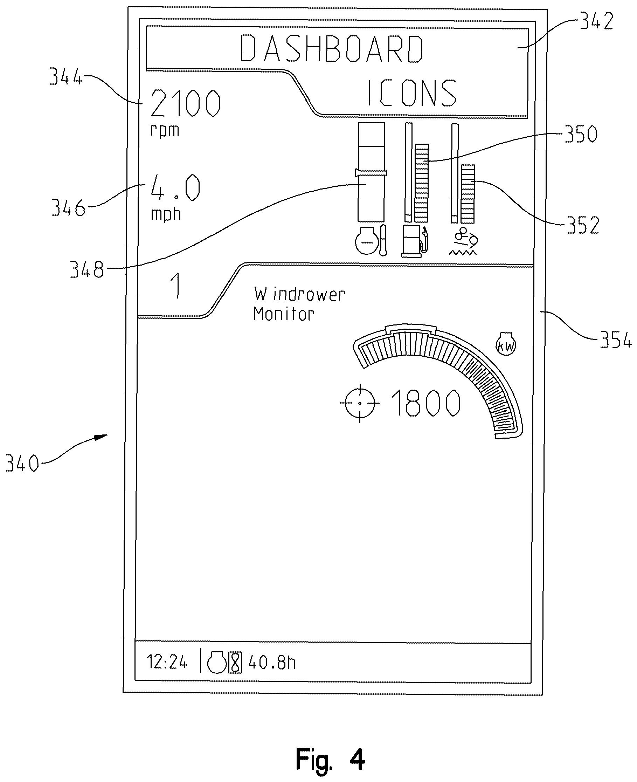

In one implementation, the machine information display 320 includes an operator viewable display 340 of FIG. 4. As illustrated the display 340 includes a plurality of generally known dashboard icons 342 as know by those skilled in the art. Such icons include, but are not limited to, turn indicators, battery power level, hazard light indicator, headlamp illumination, parking brake setting, power takeoff status, oil pressure warning, and others. the display 340 further includes a current engine speed 344 in RPMs, a current vehicle speed 346 in miles per hour (mph), a coolant temperature 348, a fuel gauge 350, and a urea gauge 352. A windrower monitor 354 is further illustrated and in one implementation provides an engine speed guidance value which provides a recommended engine speed to the operator. In this example, the engine speed guidance is 1800 RPM.

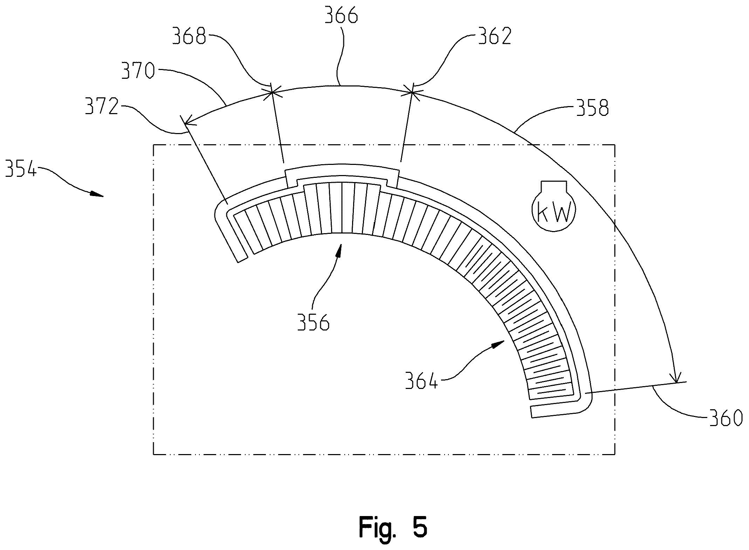

As further illustrated in FIG. 5, the monitor 354 includes a curved bar graph 356, which in one implementation includes 40 bars arranged in a curved pattern. Other patterns are contemplated. The graph 356 illustrates a range of engine RPMs identified by the controller 302 that includes RPM values representative of engine loads. A first bar segment 358 extends from a first point 360 to a second point 362. Consecutive highlighted bars 364 located between the first point 360 and the second point 362 indicate the current engine RPMs. This segment 364 indicates where the engine may be loaded by an operator adjusting engine RPMs. A second segment 366 extending from the second point 362 to a third point 368 indicates where loading of the engine provides for the most efficient operation of the engine. A third segment 370, extending from the third point 368 to the fourth point 372 indicates where engine loading may be reduced to prevent either excess fuel consumption or an unsatisfactory operation of the engine where either engine power or engine speed may require adjustment by the operator to provide better fuel efficiency or consumption at a maximum power consumption.

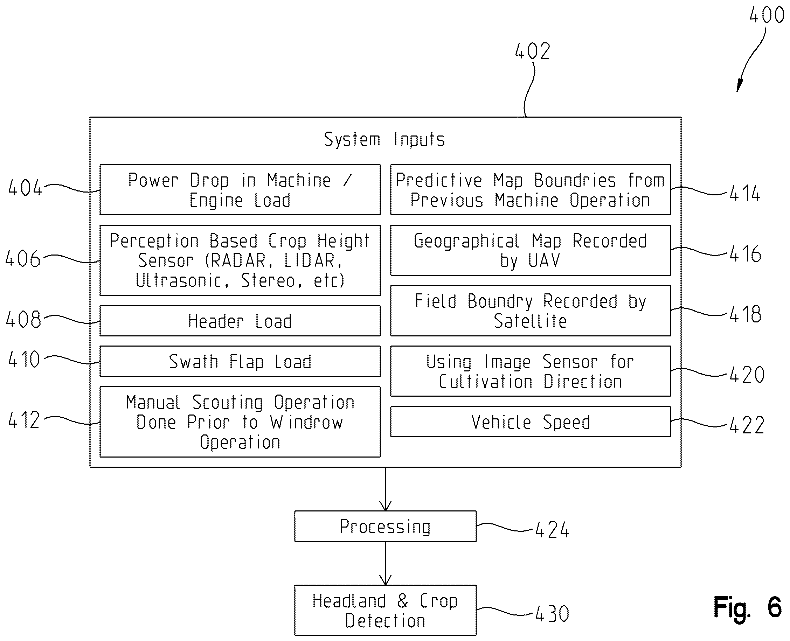

Turning now to FIG. 6, a block diagram of operation of a headland and crop detection module 400 on the controller 302. One or more system inputs 402 from the machine 10 are provided to the headland and crop detection module 400 on the controller 302. In one implementation, the crop detection module 400 includes a real-time data interface configured to receive real-time data as well as the other system inputs 402. The system inputs 402 include any of a power drop in machine or engine load input 404, a perception based crop height input 406, a header load input 408, a swath flap load input 410, a manual scouting input 412, a predictive map boundary input 414, a geographical map input 416, a field boundary input 418, a cultivation direction input 420, a vehicle speed input 422, a cutter width of the header 26, or other input that aids in identification or detection of the headland or the edge of crop. The power drop in machine or engine load input 404 is a change in the amount of power or engine load as the header 26 reaches the end of a row and exits the field thereby reducing or lowering the amount of power required by the header 26. The vehicle speed input 422 is the velocity of the header 26 or the tractor 11 and may be used in the determination of the machine or engine load input 404. A perception-based crop height input 406 is based on information for a change in the height of the crop that identifies if there is crop present or no crop present in a forward looking direction of the header 26 in direction WD. The crop height information may be provided by one or more imaging units located on the machine 10, including the tractor 11, the header 26. Radar, LiDAR or light detection and ranging, ultrasonic, radio waves, electromagnetic waves, video information, or still image information may be used and provide a few exemplary implementations that can provide this information. A header load input 408 may be determined by the amount or weight of cut crop located on a transfer device of the header 26 as sensed by the one or more header actuators or hydraulic cylinders or header sensor.

Continuing with FIG. 6, in some implementations, the header 26 includes a swath flap or swath board that is supported for movement by a support structure between a raised position and a lowered position. The swath flap is configured to, at least, partially shape a windrow of a crop material. The swath flap deflects the cut crop material onto the ground in a belly pass or the swath flap may be raised to pass the cut crop material to a crop merger in a merger pass. When the swath flap is raised or engaged, a load experienced on a swath flap sensor associated with the swath flap may indicate the crop is present on the swath flap and provide a swath flap load input 410 that indicates the header 26 remains in the crop field and has not exited the crop field. As the header 26 exits the crop field there is there is no cut crop on the swath flap which corresponds to a change in the swath flap load experienced by the swath flap sensor and provides the swath flap load input 410 that indicates the header 26 has exited the crop field.

Continuing with FIG. 6, a manual scouting input 412 includes a manual scouting operation done or performed by an operator that determines the crop area and then enters this into the controller 302. A predictive map boundary input 414 includes a map boundary of the crop area determined from previous or earlier operation of other machines that are not the machine 10 and communicated to the controller 302. A geographical map input 416 includes a geographical map of the crop field or area and headland recorded by an unmanned aerial vehicle or UAV and communicated to the controller 302. A field boundary input 418 includes a crop area recorded by a satellite or other means and transmitted to the controller 302. A cultivation direction input 420 includes detection of cultivation or planting of the crop field to indicate the crop area wherein the detection may be performed by any of the imaging units, radar, LiDAR or light detection and ranging, ultrasonic, radio waves, electromagnetic waves, to name a few exemplary implementations that may provide this information. The controller 302 receives one or more of the system inputs 402-422 and determines via a processing algorithm 424, lookup table, control software, control logic, a method, or other means a headland and crop detection 430 that includes an identification of the headland and crop edge as the header 26 approaches. The headland and crop detection 430, in some implementations, determines the distance to the headland and/or to a crop edge and accounts for the travel velocity of the machine 10, the tractor 11, and/or the header 26 as the machine 10 approaches the headland.

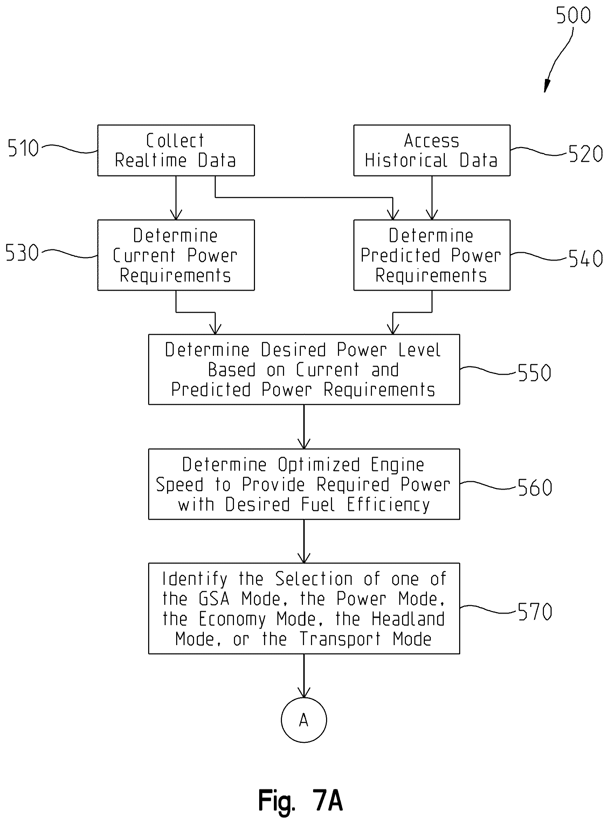

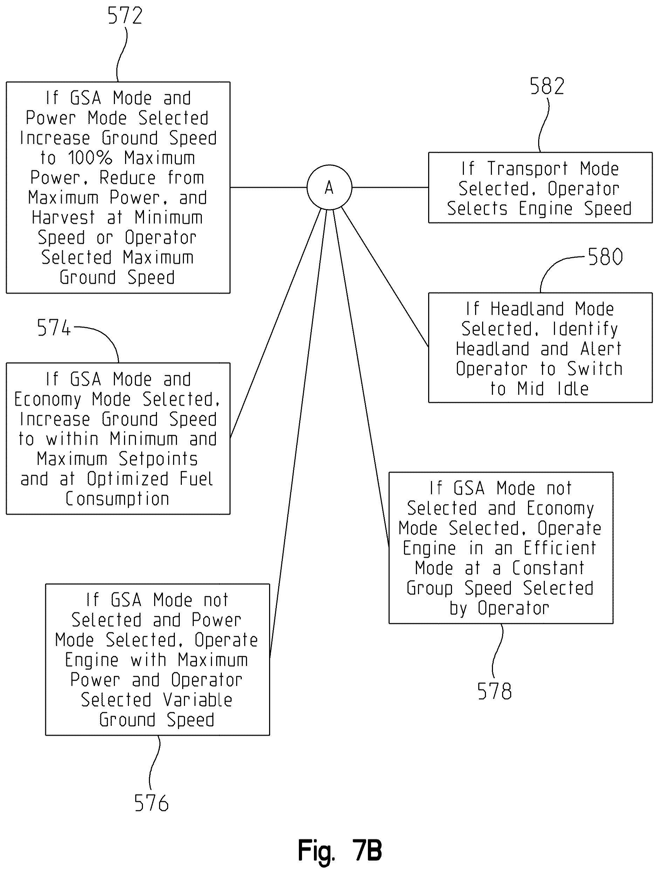

FIG. 7 illustrates an exemplary flow diagram 500 for a power management system. At block 510, the power management system collects and/or receives the real-time data for the machine 10 and header 26. At block 520, the power management system accesses real-time data, historical power-consumption data, and related data that can be used to help predict upcoming power requirements of the machine 10. The historical power-consumption and related data can be stored on-board or remote from the machine 10.

At block 530, the power management system determines the current power requirements of the machine 10 based on the real-time data. At block 540, the power management system determines the predicted future power requirements of the machine 10 based on the real-time data and the historical data. At block 550, the power management system determines a desired power level based on the current and predicted future power requirements. At block 560, the power management system determines an optimized engine speed to provide the desired power level with the desired fuel efficiency and reserve, for example by using BSFC levels. At block 570, the power management system identifies the selection of one or more of the GSA mode, the power mode, the economy mode, the headland mode or the transport mode.

At block 572, if GSA mode is enabled and the power mode is selected, the ground speed is increased until the machine, i.e. the load, reaches a 100% maximum power at a location where a power curve is flat, meaning that no additional power may be achieved to hold the engine speed. Once reached, the engine speed is reduced until the engine reaches the machine harvesting minimum speed (configurable or from user interface) or the operator adjustable maximum ground speed. The 100% maximum power as described herein includes the maximum power rating of the engine as defined by the engine manufacturer.

At block 574, the GSA mode may be selected, and the economy mode is selected by the operator when harvesting at a constant ground speed or when the throughput of the windrower is insufficient to reach a maximum engine load. In this condition, fuel consumption may be optimized. To achieve optimized fuel consumption, the controller 302 increases the ground speed by increasing engine speed. The engine speed may be selected by the controller 302 but remains within minimum and maximum engine speed setpoints and to achieve an optimal fuel consumption. In one or more implementations, the setpoints may be preselected by the manufacturer or can be selected by the operator or other individuals.

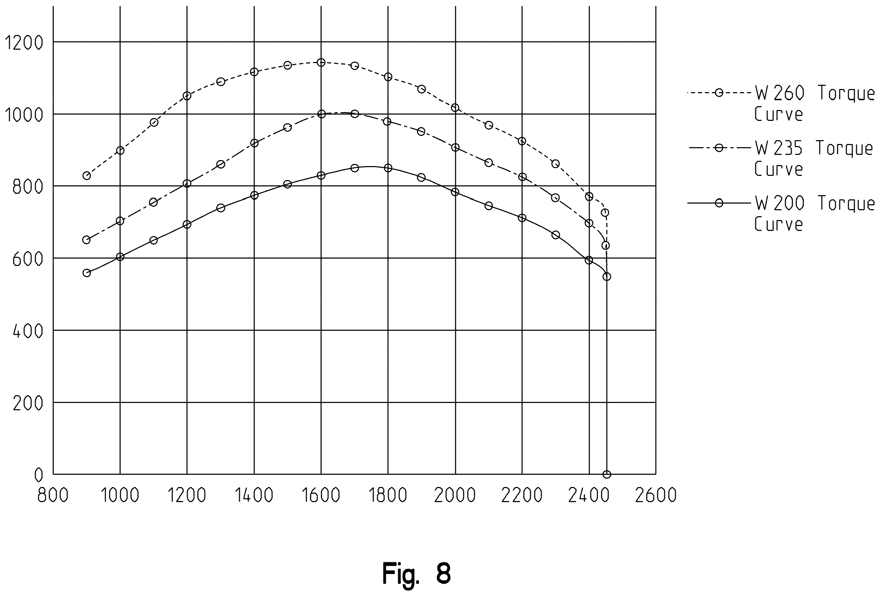

In one implementation of the economy mode, fuel consumption may be optimized by selecting a fuel-efficient curve from the user interface. As illustrated in FIG. 8, the interface may display a plurality of economy curves which correspond to curves which may be selected from the engine speed versus engine power showing brake specific fuel consumption (BSFC) of FIG. 2. As seen in the exemplary illustration of FIG. 8 a first torque curve W260, a second torque curve W235, and third torque curve W200 are illustrated. FIG. 8 illustrates three specific power curves for a given engine having 3 or more power curves. In this illustration, maximum power is identified by power curve W260 and the economy mode is identified by the next lower power curve, power curve W235. Each of the torque curves pass through an average efficient zone with many more fuel-efficient spots within a region. By identifying a plurality of curves within the BSFC graph, one of the curves may be selected to define an economy curve for a given base curve. For instance, in the implantation of FIG. 8, the first torque curve W260 is considered a base curve. Once the base curve is identified, an economy curve is defined by selecting choosing a next power level, i.e. torque curve 235 or torque curve 200. Selection of the economy curve is based on which curve provides more fuel efficiency and does not compromise a power-speed characteristic, which means selecting a power-speed curve that is flat in a fuel-efficient zone. In this implementation the economy curve may be torque curve W235.

When the GSA mode is active and the economy mode is selected, the operator has one or more options to limit the maximum engine power. In an option 1, the operator may vary the ground speed while limiting the engine power to a power less than the maximum engine power. In this option, the economy curve is selected by the controller 302 by the software and commanded to an engine controller. The operator manually drives the machine with joystick 304. The selected economy curve limits the maximum power at any given engine speed. In an option 2, the operator selects a fixed vehicle speed at which to drive the machine 10. In one implementation, the ground speed selected by the operator is adjustable between 1.2 mile per hour and 12 miles per hour. In other implementations, other selectable ground speeds may be used including several different selectable ground speed setpoints. Once the system is activated, the desired engine speed will be set to the Machine Max Harvesting Engine Speed (configurable or from UI). The Ground speed starts increasing, once the machine reaches the target vehicle speed. After reaching the target vehicle speed, the system checks for an engine speed between the maximum and minimum harvesting engine speed, where the machine is working at the optimal fuel consumption. During this situation, a constant engine speed shall have the highest priority. In one or more implementations, engine protection may be applied to avoid plugging the machine. In a further implementation, the machine may be operated at the most fuel efficient condition in light harvest conditions, such as in grass.

The controller selects an economy curve which is provided to the engine controller. Once the vehicle reaches a constant speed based on the selected vehicle speed, a control algorithm of the controller 302 reduces the engine speed to optimize fuel economy selecting the most fuel-efficient location of the selected economy curve while maintaining the set vehicle speed.

At block 576, if the GSA mode is not selected, i.e. non-actuation, and the power mode is selected, the operator may select a ground speed, which may be varied. Once selected, the engine is operated with a maximum power and at the operator's selected ground speed. At block 578, if the GSA mode is not selected, i.e. non-actuation, and economy mode is selected, the engine is operated in an efficient mode at a constant ground speed selected by operator. In this case, when Ground Speed Automation is not enabled, Operator can choose the Base or Economy curve, in which its resulted in to pick the next power level base (maximum power) curve will be picked. At block 580, if the headland mode is selected, the controller identifies a headland and alerts operator to switch to mid idle. At block 582, if the transport mode is selected, the operator selects engine speed based on an engine speed suggested by the controller or a steering, braking, and backup controller (SBBA). The SBBA controller may transmit a propulsion-based engine speed request to adjust engine speed. In one implementation, the SBBA controller may be a distinct controller or may be implemented as part of a general controller.

The power management system informs the operator of the optimized engine speed. In some implementations at block 480, the power management system automatically implements the optimized engine speed. In some implementations at block 480, the power management system automatically implements the optimized engine speed while maintaining a desired ground speed for the machine 100.

By optimizing engine speed to run at lower RPM levels as described herein, fuel efficiency may be improved. By operating the engine at lower RPMs, fuel efficiency may be improved. Fuel may be conserved while still maintaining the necessary power to effectively operate machine. This may lead to cost savings in the long run, especially considering the volume of fuel consumed during machine operations. In addition, running the engine at lower RPM may help reduce the wear and tear on critical engine components. By operating within a lower RPM range, lifespan of the of the engine may be extended, maintenance costs may decrease, and the risk of unexpected breakdowns or repairs may be minimized.

Lowering the engine speed may also contribute to a quieter operation environment. This lowering of engine speed may be beneficial for machine operators in terms of reducing noise pollution. Operating at lower RPM levels may also have a positive impact on the environment by reducing emissions and overall carbon footprint.

While the disclosure has been illustrated and described in detail in the drawings and foregoing description, such illustration and description are to be considered as exemplary and not restrictive in character, it being understood that illustrative implementation(s) have been shown and described and that all changes and modifications that come within the spirit of the disclosure are desired to be protected. It will be noted that alternative implementations of the present disclosure may not include all the features described yet still benefit from at least some of the advantages of such features. Those of ordinary skill in the art may readily devise their own implementations that incorporate one or more of the features of the present disclosure and fall within the spirit and scope of the present invention as defined by the appended claims.

## Claims

1. A power management system for an agricultural work machine (10) having an engine (24), the power management system comprising:
a real time data interface (400) configured to receive real time work machine data;
a processor (308) configured to compute current machine operating conditions based on the real time work machine data; and
the processor (308) further configured to compute an engine speed or a maximum power based on the current machine operating requirements, and to adjust one of the engine speed based on actuation of an economy mode selector (328) or to adjust the maximum power based on actuation of a power mode selector (326).

2. The power management system of claim 1, further comprising a ground speed automation selector (324), wherein actuation of the ground speed automation selector (324) enables the processor (308) to compute the engine speed based on the actuation of the economy mode selector (328).

3. The power management system of claim 1 or 2, wherein the computed engine speed is determined by the processor (308) to be within a minimum value and a maximum value, wherein the computed engine speed is selected to optimize fuel consumption.

4. The power management system according to at least one of the preceding claims, further comprising a ground speed automation selector (324), wherein actuation of the ground speed automation selector (324) enables the processor (308) to compute the maximum power based on the actuation of the power mode selector (326).

5. The power management system according to at least one of the preceding claims, wherein the computed maximum power is determined by the processor (308) by increasing ground speed to a value determined at one hundred percent maximum power, then reducing the ground speed from the one hundred percent maximum power and directing the work machine (10) to travel at a minimum speed or at an operator selected maximum ground speed.

6. The power management system according to at least one of the preceding claims, further comprising a ground speed automation selector (324), wherein non-actuation of the ground speed automation selector (324) and actuation of the economy mode selector (328) enables the processor (308) to operate the engine at an efficient mode at a constant ground speed selected by an operator, wherein the efficient mode includes a selection of a next power curve next to a maximum power curve.

7. The power management system according to at least one of the preceding claims, further comprising a ground speed automation selector (324), wherein non-actuation of the ground speed automation selector (324) and actuation of the power mode selector (326) enables the processor (308) to operate the engine at a maximum power and at a variable ground speed selected by an operator.

8. The power management system according to at least one of the preceding claims, further comprising a headland mode selector (314, 330) configured to identify a headland, and actuation of the headland mode selector (314, 330) provides an alert to an operator to direct the processor (308) to operate the engine at an idle speed selected by the operator.

9. The power management system according to at least one of the preceding claims, further comprising a transport mode selector (332) configured to identify a transport mode, and actuation of the transport mode selector (332) enable an operator to direct the processor (308) to operate the engine at an engine speed selected by the operator or a propulsion based engine speed.

10. A power management method for an agricultural work machine (10), the power management method comprising:
receiving real time work machine data for the work machine (10);
computing current machine operating conditions based on the real time work machine data; and
computing with a processor (308), in response to actuation of a ground speed automation selector (324), one of an engine speed or a maximum power based on the computed current machine operating conditions, wherein the computed engine speed is computed in response to actuation of an economy mode selector (328) and wherein the computed maximum power is computed in response to actuation of a power mode selector (326).

11. The power management method of claim 10 wherein the computing with the processor (308) includes computing the engine speed to be within a minimum value and a maximum value, wherein the engine speed is identified by the processor (308) to optimize fuel consumption.

12. The power management method of claim 10 or 11, wherein the computing with the processor (308) includes computing the maximum power by increasing a ground speed to a value determined at a one hundred percent maximum power, then reducing the one hundred percent maximum power to a reduced power, and adjusting the ground speed to an adjusted ground speed based on the reduced power or adjusting the ground speed to an operator selected ground speed selected by the operator.

13. The power management method according to at least one of the claims 10 to 12, further comprising identifying, by the processor (308), non-actuation of the ground speed automation selector (324) and actuation of the economy mode selector (328) and operating the engine at an efficient mode at a constant ground speed selected by the operator.

14. The power management method according to at least one of the claims 10 to 13, further comprising identifying, by the processor (308), non-actuation of the ground speed automation selector (324) and actuation of the power mode selector (326) and operating the engine (24) at a maximum power and at a variable ground speed selected by an operator.

15. An agricultural work machine, the agricultural work machine comprising a power management system according to at least one of the claims 1 to 9.
